# EUROPEAN PATENT APPLICATION

(11) **EP 1 202 177 A2**
(43) Date of publication of application: **02.05.2002**
(21) Application number: 01125250.9
(22) Date of filing: 24.10.2001
(51) Int. Cl.: G06F 11/22

(54) **Vehicular control device having self-diagnosis function and self-diagnosis program for implementing the same**

(30) Priority: 27.10.2000 JP 2000329026
(71) Applicant: Denso Corporation, Kariya-city, Aichi-pref., 448-8661 (JP)
(72) Inventor: Maki, Yoshiyuki, Denso Corporation, Kariya-city, Aichi-pref. 448-8661 (JP); Oi, Masaya, Denso Corporation, Kariya-city, Aichi-pref. 448-8661 (JP); Kimezawa, Tsukasa, Denso Corporation, Kariya-city, Aichi-pref. 448-8661 (JP)
(74) Representative: Leson, Thomas Johannes Alois, Dipl.-Ing.

(57) **Abstract**

Each malfunction-information storing object (300) is prepared for each corresponding malfunction check item that is consistent with a corresponding diagnosis target. The malfunction-information storing object (300) specifies a control instruction with respect to each corresponding malfunction information. A malfunction-information managing object (200) adjusts the specified control instruction and outputs final MIL information. In an operation that is conducted separately from an operation that is triggered by a malfunction detection request, an MIL controlling object (400) outputs an MIL information request upon receiving an MIL state renewal request from a platform (500). Upon receiving the MIL information request, the malfunction-information managing object (200) outputs the MIL information. Adjustment of a result of a malfunction determination operation and an MIL control operation are carried out separately by the malfunction-information managing object (200) and the MIL controlling object (400), separately.

## Description

The present invention relates to a self-diagnosis function of a vehicular control device that controls a vehicle and also relates to a technique for implementing the self-diagnosis function through an object oriented program.

Recently, the mechatronics technology, which combines the mechanics technology with the electronics technology, has shown the notable progress as a result of the substantial progress in the electronics technology, such as the advent of high performance microprocessors. As a part of the progress in the mechatronics technology, various computer systems have been developed for use in vehicles, such as automobiles. These vehicular computer systems are used to achieve an improvement in resource consumption, energy consumption, running performance, safety, comfort or the like and are provided in various systems, such as an engine system, a drive system, a running/safety system, an entertainment system and the like of the vehicle.

Among the various computer systems, there is a particularly strong demand for a vehicle controlling computer system to achieve high reliability. For example, if the vehicle controlling computer system is not able to detect a malfunction of a particular component of the system, the vehicle may experience a driving trouble or may not be able to continue its driving. To avoid this, one previously proposed computer system has a self-diagnosis function to improve its reliability. Specifically, a diagnosis process is implemented to achieve the self-diagnosis function. In the diagnosis process, operations of a computer unit, various sensors and the like are automatically and periodically checked. Then, if any malfunction is detected, a corresponding malfunction indicator light (MIL) is lighted or flashed to notify a user of the malfunction, and a malfunction code (DTC) is stored in a memory to notify a service person of a damaged component corresponding to the malfunction code. Targets of the diagnosis process include a crank angle sensor, a cam angle sensor, a water temperature sensor and the like. The number of the targets of the diagnosis process reaches about 200 or more. Hereinafter, the targets of the diagnosis process will be simply referred to as "the diagnosis targets".

The present invention relates to an MIL control operation for controlling the MILS in the diagnosis process. The malfunction notification through the MILS provides the user with systematic malfunction information of about 200 or more diagnosis targets through several MILS. Thus, in the MIL control operation, it is essential to provide logic for systematically interpreting and judging malfunction information transmitted from each one of the diagnosis targets.

One previously proposed technique for implementing such a diagnosis process is disclosed, for example, in Japanese Unexamined Patent Publication No. 7-190897 (corresponding to U.S. Patent No. 5,671,141). In this publication, there is disclosed a program architecture including an MIL controller module that illuminates the MIL when a predetermined number of malfunctions are detected.

The MIL controller module disclosed in the above publication illuminates the MIL when the predetermined number of malfunctions are detected. Furthermore, (I) malfunction judgment of the diagnosis target, (II) adjustment of the result of each malfunction judgment and (III) an MIL control operation that is carried out based on a result of the adjustment are conducted by the single MIL controller module. Thus, when specification change, such as change of a diagnosis target, takes place, a relatively large amount of time is required to modify the MIL controller module. This will be further described in the following (1)-(3).

(1) The malfunction judgment (I) of the diagnosis target cannot be a simple process of checking an operational state of the diagnosis target from time to time to judge or determine whether the diagnosis target is malfunctioning. This is due to the fact that each malfunction has a particular level. For example, in a case of "a malfunction" of an input-signal line connected to a sensor, a temporal loose connection of, for example, a connector is called "the malfunction", and complete disconnection of the signal line is also called "the malfunction". In the former case, the connector could resume its normal function later on and thereby may not be required to be replaced. Thus, in light of the above fact, in one previously proposed technique, the temporal malfunction, such as the loose connection of the connector, is referred to as "temporarily abnormal", and the permanent malfunction, such as the complete disconnection of the signal line, is referred to as "abnormal". The malfunction information that indicates such a level of malfunction is stored in a memory. Then, the MIL control operation is carried out based on such malfunction information, so that flashing, lighting-on or lighting-off of the MIL is generally conducted based on the level of the malfunction.

Furthermore, even if the malfunction information is the same, that is, the level of the malfunction is the same, the MIL control operation may vary from one diagnosis target to another diagnosis target. That is, for example, if the diagnosis target is the important one and is determined to be temporarily abnormal, the MIL should be lighted on or flashed immediately. On the other hand, if the diagnosis target is not the important one and is determined to be temporarily abnormal, the MIL may not be lighted on or flashed immediately until the diagnosis target becomes completely abnormal.

Thus, even if the malfunction information is determined in view of the malfunction level of the diagnosis target, the control operation of the MIL varies depending on the type of the diagnosis object. Thus, the logic for executing the adjustment (II) of the result of each malfunction judgment may be complicated.

Particularly, the previously proposed MIL controller module is constructed to carry out the series of the processes (I)-(III) at once. Thus, when anyone of the diagnosis targets is changed, the logic for executing the malfunction judgment (I) of the diagnosis target and the logic for executing the adjustment (II) of the result of the malfunction judgment need to be changed, so that a relatively large amount of time may be required to change the MIL controller module.

(2) The MIL controller module disclosed in the above publication is operated upon receiving a command from a scheduler. That is, the series of the processes (I)-(III) are carried out upon receiving the command from the scheduler.

A timing for executing the malfunction judgment (I) of the diagnosis target varies depending on the diagnosis target. For example, a malfunction of one diagnosis target may be judged at predetermined time intervals, e.g., at every 4 ms, 8 ms or 16 ms. A malfunction of another diagnosis target may be judged at predetermined crank angles (CA), e.g., at every 30 CA, 60 CA or 180 CA. Furthermore, a timing for executing the MIL control operation (III) does not coincide with the timing for executing the malfunction judgment (I) of the diagnosis target.

Since the series of the processes (I)-(III) are conducted sequentially in the previously proposed MIL controller module, the timing for executing the MIL control operation (III) needs to be adjusted in view of the timing for executing the malfunction judgment (I) of the diagnosis target. If any diagnosis target needs to be changed, this will constitutes a factor that lengthens the time required for changing the MIL controller module.

(3) Furthermore, the logic for executing the MIL control operation (III) is constructed to control the MIL based on the result of the adjustment and to provide a final control instruction for instructing a control operation of the corresponding MIL, such as flashing, lighting-on or lighting off, based on vehicle information. Thus, the logic for executing the MIL control operation (III) is generally not dependent on the type of diagnosis target and is generally not required to be changed when the diagnosis target is changed. On the other hand, when the vehicle information is changed, only the logic for executing the MIL control operation (III) is required to be changed.

However, since the MIL controller module disclosed in the above publication is modularized to conduct the series of the processes (I)-(III), so that reusability of the MIL controller module is relatively low.

A reusable program structure for executing the malfunction judgment (I) of the diagnosis target has been disclosed in Japanese Patent Application No. 2000-130180 (corresponding to U.S. Patent Application No. 09/840,877), which is incorporated herein by reference. Thus, the present invention is particularly focused on modularization of logic for executing the adjustment (II) of the result of each malfunction judgment and logic for executing the MIL control operation (III) conducted based on the result of the adjustment.

The present invention addresses the disadvantages discussed in the above sections (1)-(3), and it is an objective of the present invention to improve reusability of a self-diagnosis program that implements an MIL control operation in a case of specification change, such as change of a diagnosis target.

To achieve the objective of the present invention, there is provided a vehicular control device having a self-diagnosis function for informing occurrence of abnormality in at least one diagnosis target by controlling at least one malfunction indicator light (MIL) based on a result of a malfunction detection operation of each one of the at least one diagnosis target. The vehicular control device has an object oriented self-diagnosis program stored therein for implementing the self-diagnosis function. The object oriented self-diagnosis program includes at least one malfunction-information storing object and a malfunction-information managing object. The at least one malfunction-information storing object specifies a control instruction for instructing a control operation of the at least one MIL with respect to malfunction information of the each one of the at least one diagnosis target based on the malfunction information of the each one of the at least one diagnosis target. The malfunction information of the each one of the at least one diagnosis target is determined based on the result of the malfunction detection operation of the each one of the at least one diagnosis target in view of a level of malfunction of the each one of the at least one diagnosis target. The malfunction-information managing object carries out adjustment of the control instruction of the at least one MIL specified by the at least one malfunction-information storing object based on the malfunction information of the each one of the at least one diagnosis target and outputs MIL information for controlling the at least one MIL based on a result of the adjustment of the control instruction of the at least one MIL.

In place of the above object oriented self-diagnosis program, there may be provided an object oriented self-diagnosis program including a malfunction-information managing object that outputs MIL information for controlling the at least one MIL when a request for controlling the at least one MIL is received. The request for controlling the at least one MIL is different from a request for executing the malfunction detection operation of the each one of the at least one diagnosis target.

Also, in place of the above object oriented self-diagnosis program, there may be provided an object oriented self-diagnosis program including a malfunction-information managing object that outputs MIL information for controlling the at least one MIL, and an MIL controlling object for controlling the at least one MIL based on the MIL information outputted from the malfunction-information managing object.

Furthermore, in place of the above object oriented self-diagnosis program, there may be provided an object oriented self-diagnosis program including at least one malfunction-information storing object that stores malfunction information of the each one of the at least one diagnosis target determined based on the result of the malfunction detection operation of the each one of the at least one diagnosis target in view of a level of malfunction of the each one of the at least one diagnosis target, and a malfunction-information managing object that commands the at least one malfunction-information storing object to store the malfunction information of the each one of the at least one diagnosis target based on the result of the malfunction detection operation of the each one of the at least one diagnosis target. The malfunction-information managing object may output MIL information for controlling the at least one MIL based on the malfunction information of the each one of the at least one diagnosis target stored by the at least one malfunction-information storing object. The object oriented self-diagnosis program may further include an MIL controlling object for controlling the at least one MIL based on the MIL information outputted from the malfunction-information managing object.

The invention, together with additional objectives, features and advantages thereof, will be best understood from the following description, the appended claims and the accompanying drawings in which:
FIG. 1 is a schematic view of an engine control system according to an embodiment of the present invention;
FIG. 2 is a block diagram showing a structure of an engine control unit of the engine control system according to the embodiment;
FIG. 3 is a schematic view showing a structure of a self-diagnosis program;
FIG. 4 is a MSC showing a procedure of MIL control operation;
FIG. 5 is a schematic view showing information stored by each malfunction-information storing object;
FIG. 6 is a flowchart showing an MIL response process;
FIG. 7 is a flowchart showing an MIL information output process; and
FIG. 8 is a flowchart showing a control instruction output process.

An embodiment of the present invention will be described with reference to the accompanying drawings.

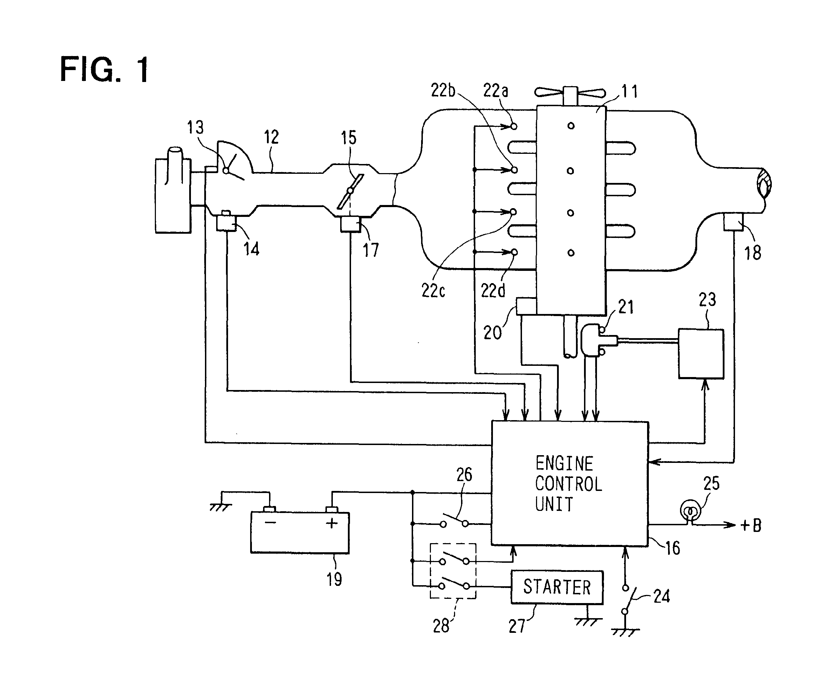

FIG. 1 is a diagram showing an entire structure of an engine control system. The engine control system includes an engine 11 and an engine control unit 16 that controls the engine 11. The engine control unit 16 corresponds to "a vehicular control device" of the present invention.

Intake air is supplied to the engine 11 from an air cleaner through an intake air pipeline 12. An air flow sensor 13 for measuring an intake air flow and an intake air temperature sensor 14 for measuring an intake air temperature are provided in the intake air pipeline 12. Furthermore, a throttle valve 15 driven by an accelerator pedal is provided in the intake air pipeline 12.

The engine control unit 16 receives various signals indicative of a state of the engine 11. These signals include an intake air flow signal of the air flow sensor 13 indicative of an intake air flow, a throttle valve position signal of a throttle sensor 17 indicative of a throttle valve position of the throttle valve 15, an air-fuel ratio (A/F) signal of an air-fuel ratio sensor 18 indicative of an oxygen concentration in exhaust gas, a battery voltage signal of a battery 19, a water temperature signal of a water temperature sensor 20, a rotational angle signal of a distributor 21 that is driven by the engine 11 and a cylinder identification signal of the distributor 21.

The engine control unit 16 controls an operation of the engine 11. Specifically, the engine control unit 16 computes a fuel injection amount of each cylinder of the engine 11 in consistent with the current state of the engine 11 based on the above signals and outputs a fuel injection signal to each injector 22a, 22b, 22c, 22d provided to each corresponding cylinder. Furthermore, the engine control unit 16 outputs an ignition signal to an igniter 23.

The engine control unit 16 also diagnoses various components of the vehicle based on sensor signals outputted from corresponding sensors. A test switch 24 is provided to the engine control unit 16. The test switch 24 is provided for setting a diagnosis mode for outputting a result of the diagnosis. A malfunction indicator light (MIL) 25 for indicating the result of the diagnosis is connected to the engine control unit 16.

A switch 26 is an ignition switch that connects the battery 19 to the engine control unit 16. A starter switch 28 is provided for controlling a starter motor 27 in a synchronous manner with respect to the ignition switch 26.

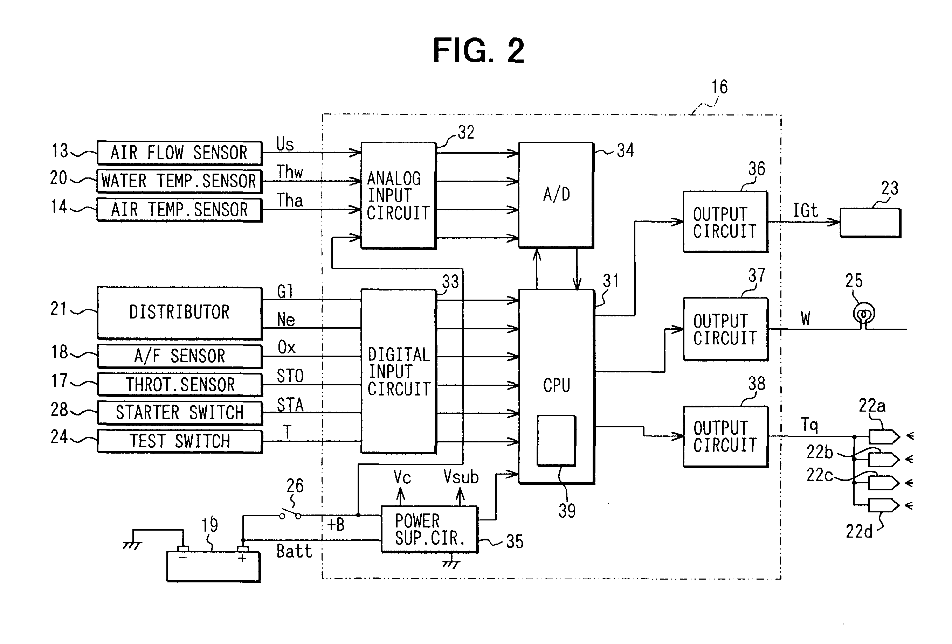

Next, the engine control unit 16 will be described in greater detail. FIG. 2 is a block diagram showing a structure of the engine control unit 16 shown in FIG. 1. The engine control unit 16 includes a CPU 31 that constitutes a computer system. The CPU 31 receives data from both an analog input circuit 32 and a digital input circuit 33. Analog data from the analog input circuit 32 are converted to digital data through an A/D converter 34 and are then supplied to the CPU 31.

The analog input circuit 32 receives the sensor signal Us of the air flow sensor 13, the sensor signal Thw of the water temperature sensor 20, the sensor signal Tha of the intake air temperature sensor 14 and the voltage +B of the battery 19. The digital input circuit 33 receives the cylinder identification signal G1 of the distributor 21, the rotational angle signal Ne of the distributor 21, a lean rich signal Ox of the air-fuel ratio sensor 18 indicative of the oxygen concentration, the sensor signal STO of the throttle sensor 17 indicative of the throttle valve position of the throttle valve 15, a start signal STA of the starter switch 28 and a signal T of the test switch 24 for setting the diagnosis mode.

The A/D converter 34 acts like a mutiplexer that sequentially selects and reads the sensor signals inputted to the analog input circuit 32 upon receiving corresponding commands from the CPU 31 and converts the sensor signals to the corresponding digital data.

The power supply circuit 35 supplies the voltage +B of the battery 19 to the CPU 31 through the ignition switch 26. The power supply circuit 35 also provides a continuous backup power source Batt.

Output data from the CPU 31 are supplied to output circuits 36, 37, 38 and are then outputted from the output circuits 36, 37, 38 as output signals of the engine control unit 16. That is, the output circuit 36 outputs the ignition signal IGt to the igniter 23. The output circuit 37 outputs a signal W indicative of the result of the diagnosis to control the MIL 25. The output circuit 38 outputs an output signal Tq. The output signal Tq specifies the fuel injection amount corresponding to the operational state of the engine 11 and is outputted to each injector 22a-22d to vary the injection amount of each injector 22a-22d.

The CPU (engine control unit) 31 includes a memory 39 for storing an object oriented self-diagnosis program which will be described in greater detail below. The memory 39 includes a ROM and one of a standby RAM and a nonvolatile EEPROM. The standby RAM is supplied with the electric power to keep the data stored therein even when the ignition switch 26 is turned off. The self-diagnosis program is stored in the ROM. The standby RAM or the EEPROM stores the malfunction information that is provided when the self-diagnosis program is executed.

A characteristic feature of the present embodiment is found in the self-diagnosis program stored in the ROM of the memory 39. Thus, the self-diagnosis program will now be described in greater detail.

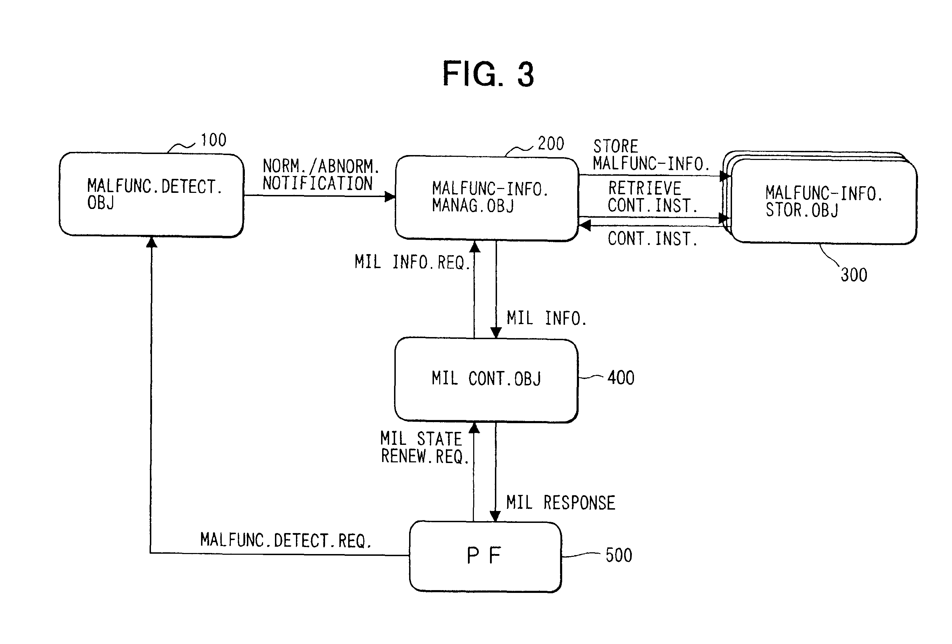

FIG. 3 is a schematic diagram showing an architecture of the self-diagnosis program. The self-diagnosis program includes a plurality of programs, each having an object-oriented design. As is well known in the art, the object-oriented design is different from a previously proposed design in which a software is focused on a process (e.g., a process of fuel injection). In the object-oriented design, modeling is carried out using an object as a basic unit, and each process is described based on characteristics and behavior of the corresponding object. This basic unit is referred to as "object". The program that has the object-oriented design is constructed using the objects as its minimum constituent units. During execution of the program, a series of processes are executed while messages transmitted between the objects are used to connect between the objects. Each object includes data (attribute) and a method (procedure) for processing the data. The method of one object is executed upon receiving the corresponding message from the other object. In this description, although each object conducts a corresponding action by itself (e.g., the object detects a malfunction), it will be understood that the action is actually carried out when the CPU 31 executes the corresponding program.

As shown in FIG. 3, the self-diagnosis program of the present embodiment includes malfunction detecting objects 100, a malfunction-information managing object 200, malfunction-information storing objects 300 and an MIL controlling object 400. In FIG. 3 as well as in the other drawings, each object is designated as "OBJ" for the sake of simplicity.

The objects 100-400 are programs implemented on a platform (hereinafter, simply referred as "PF") 500 and are executed upon receiving an MIL malfunction detection request (or simply referred to as "MALFUNC.DETECT.REQ.") or an MIL state renewal request (or simply referred to as "MIL STATE RENEW.REQ.") from the PF 500.

When each malfunction detecting object 100 receives the malfunction detection request from the PF 500, the malfunction detecting object 100 detects a malfunction of a corresponding diagnosis target to be diagnosed by the self-diagnosis based on the information, such as information of a corresponding sensor inputted to the engine control unit 16. Each malfunction detecting object 100 is provided for each corresponding malfunction detecting process. The PF 500 outputs the malfunction detection request at a predetermined timing that is determined depending on the diagnosis target. For example, the PF 500 may output the malfunction detection request to the corresponding malfunction detecting object 100 at predetermined time intervals, e.g., at every 4 ms, 8 ms or 16 ms. Alternatively, the PF 500 may output the malfunction detection request to the corresponding malfunction detecting object 100 at predetermined crank angles (CA), e.g., at every 30 CA, 60 CA or 180 CA.

The malfunction-information managing object 200 receives normal/abnormal notification from each malfunction detecting object 100. Then, the malfunction-information managing object 200 sends a malfunction-information (or simply referred to as "MALFUNC-INFO.") storing notification to the corresponding malfunction-information storing object 300. When the malfunction-information storing object 300 receives the malfunction-information storing notification, the malfunction-information storing object 300 stores the malfunction information. The malfunction-information storing object 300 is provided for each predetermined malfunction check item. As described above, the malfunction detection request transmitted from the PF 500 acts as a trigger for generating the malfunction information, such as "normal", "temporarily abnormal" or "abnormal", and the malfunction information is stored for each malfunction check item corresponding to the diagnosis target.

When the MIL controlling object 400 receives the MIL state renewal request from the PF 500, the MIL controlling object 400 sends an MIL information request (or simply referred to as "MIL INFO.REQ.") to the malfunction-information managing object 200. The PF 500 outputs the MIL state renewal request at a predetermined timing that is appropriate for controlling the MIL 25.

When the malfunction-information managing object 200 receives the MIL information request from the MIL controlling object 400, the malfunction-information managing object 200 requests each malfunction-information storing object 300 to retrieve a stored control instruction for instructing a control operation of the MIL 25 (hereinafter, referred to as the control instruction of the MIL 25) corresponding to the stored malfunction information. Upon receiving the request, the malfunction-information storing object 300 outputs the control instruction (or simply referred to as "CONT.INST.") of the MIL 25 corresponding to the stored malfunction information based on the stored malfunction information. Then, the malfunction-information managing object 200 outputs the MIL information for controlling the MIL 25 to the MIL controlling object 400 based on the control instruction received from each malfunction-information storing object 300.

Then, the MIL controlling object 400 outputs an MIL response to the PF 500 based on the MIL information from the malfunction-information managing object 200 and also based on vehicle information.

That is, in the present embodiment, the MIL control operation is achieved by the process, which is triggered by the MIL state renewal request and is carried out separately from the process triggered by the malfunction detection request.

Connections between the objects 200-400 in the MIL control operation will be described in greater detail with reference to a message sequence chart (hereinafter, referred to as "the MSC").

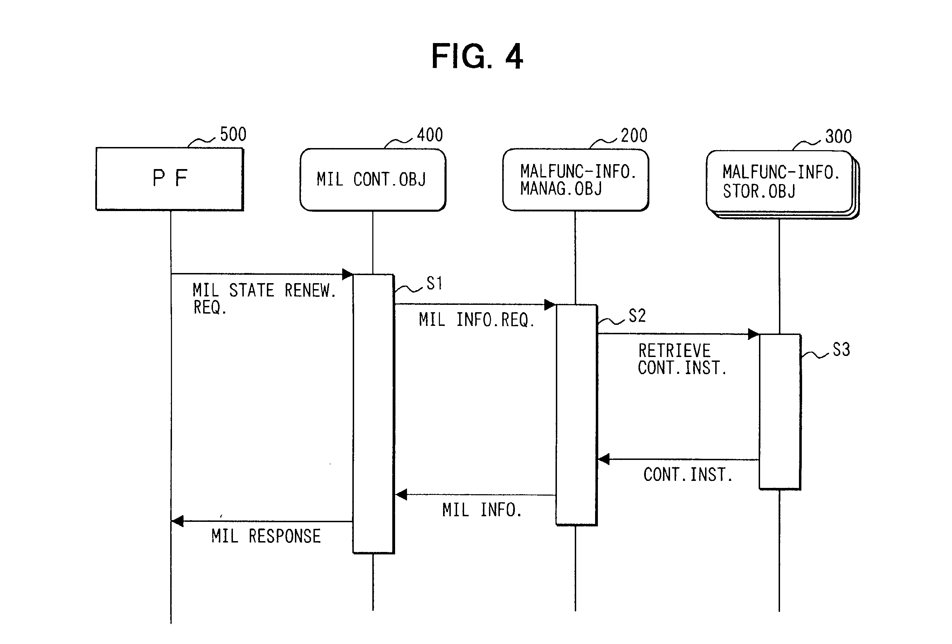

FIG. 4 is the MSC depicting procedure of the MIL control operation.

First, the PF 500 outputs the MIL state renewal request to the MIL controlling object 400. Upon receiving the MIL state renewal request from the PF 500, the MIL controlling object 400 carries out an MIL response process S1. In the MIL response process S1, the MIL information request is outputted to the malfunction-information managing object 200.

Upon receiving the MIL information request, the malfunction-information managing object 200 carries out an MIL information output process S2. In the MIL information output process S2, a control instruction retrieving request is outputted to each malfunction-information storing object 300.

Upon receiving the control instruction retrieving request, each malfunction-information storing object 300 carries out a control instruction output process S3. In the control instruction output process S3, the corresponding control instruction is specified and is outputted based on the stored malfunction information. Thus, each malfunction-information storing object 300 includes relationship information indicative of the relationship between the malfunction information and the corresponding control instruction. The control instructions mentioned above include three control instructions, namely, "flashing" (or simply referred to as "FLASH."), "lighting-on" (or simply referred to as "ON") and "lighting-off" (or simply referred to as "OFF") of the MIL 25.

In the MIL information output process S2 of the malfunction-information managing object 200, when the control instruction is outputted from all the malfunction-information storing objects 300, the MIL information is prepared and is outputted based on the control instructions outputted from all the malfunction-information storing objects 300.

When the MIL information is outputted from the malfunction-information managing object 200, the MIL controlling object 400 sends the MIL response to the PF 500 based on the vehicle information. In this way, the state of the MIL 25 is actually renewed.

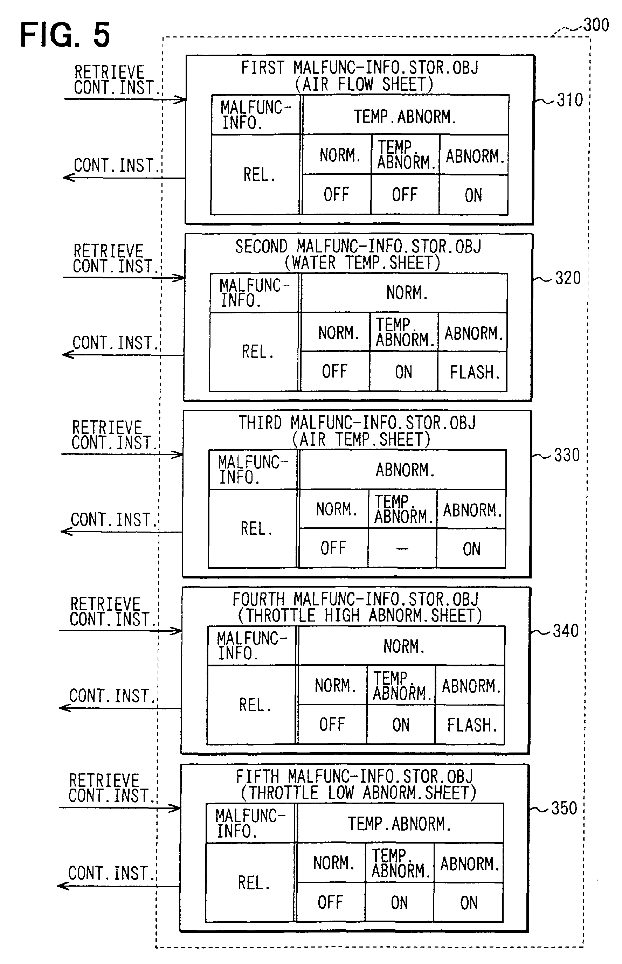

Next, with reference to FIG. 5, a relationship between the malfunction information and the control instruction stored by the corresponding malfunction-information storing object 300 will be described.

Each malfunction-information storing object 300 is provided for each malfunction check item, as mentioned above. In the present embodiment, a malfunction-information name used for storing the malfunction information is provided for each malfunction check item in a one-to-one relationship. That is, the unique malfunction-information name is provided to each malfunction-information storing object 300. For example, with reference to FIG. 5, a malfunction-information storing object 310 has the malfunction-information name of "AIR FLOW SHEET", and a malfunction-information storing object 320 has the malfunction-information name of "WATER TEMPERATURE SHEET" (or simply referred to as "WATER TEMP.SHEET"). Similarly, a malfunction-information storing object 330 has the malfunction-information name of "INTAKE AIR TEMPERATURE SHEET" (or simply referred to as "AIR TEMP.SHEET"), and a malfunction-information storing object 340 has the malfunction-information name of "THROTTLE HIGH ABNORMAL SHEET" (or simply referred to as "THROTTLE HIGH ABNORM.SHEET"). Furthermore, a malfunction-information storing object 350 has the malfunction-information name of "THROTTLE LOW ABNORMAL SHEET" (or simply referred to as "THROTTLE LOW ABNORM. SHEET"). These five malfunction-information storing objects 310-350 are simply referred to as the first to fifth malfunction-information storing objects 310-350, respectively, for the sake of clarity.

As shown in FIG. 5, each one of the first to fifth malfunction-information storing objects 310-350 stores the corresponding malfunction information as well as the corresponding relationship information (or simply referred to as "REL.") indicative of the relationship between the malfunction information and the control instruction. The malfunction information is stored by the malfunction-information managing object 200 and indicates a current malfunction level. For example, the malfunction information of the first malfunction-information storing object 310 is stored as "temporarily abnormal" (or simply referred to as "TEMP.ABNORM."), and the malfunction information of the second malfunction-information storing object 320 is stored as "normal" (or simply referred to as "NORM."). Similarly, the malfunction information of the third malfunction-information storing object 330 is stored as "abnormal" (or simply referred to as "ABNORM."), and the malfunction information of the fourth malfunction-information storing object 340 is stored as "normal". Furthermore, the malfunction information of the fifth malfunction-information storing object 350 is stored as "temporarily abnormal".

Types of malfunction information and the corresponding control operations are indicated in an upper row and in a lower row, respectively, in the relationship information. Thus, upon receiving the control instruction retrieving request from the malfunction-information managing object 200, the malfunction-information storing object 300 selects the corresponding control instruction based on the stored malfunction information and outputs it.

Next, the MIL response process S1, the MIL information output process S2 and the control instruction output process S3 will be described in greater detail for the purpose of promoting an understanding of the operations of the objects 200-400.

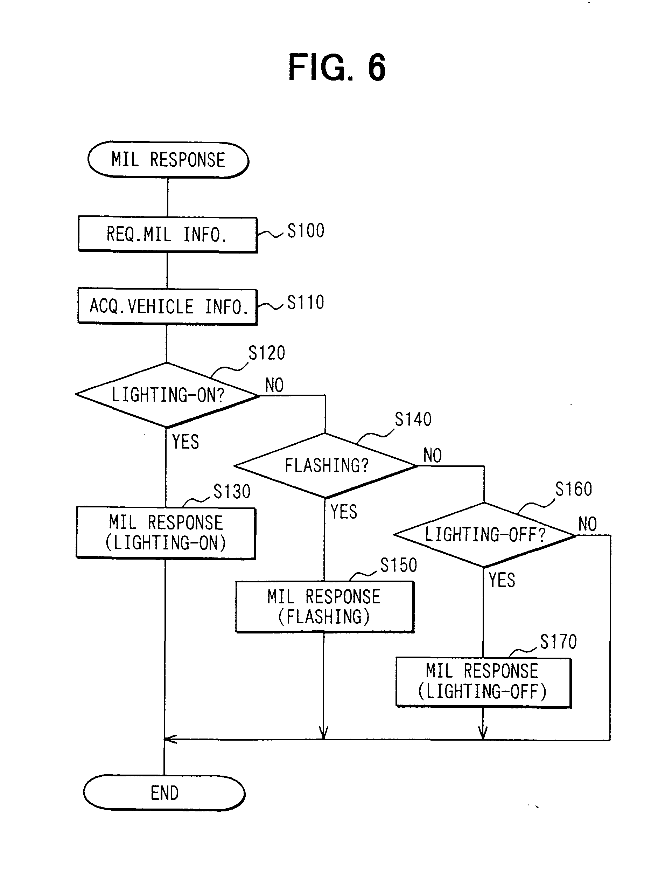

First, the MIL response process S1 will be described with reference to a flowchart shown in FIG. 6. This flowchart shows the MIL response process that is carried out by the MIL controlling object 400 when the MIL state renewal request is received from the PF 500.

First, at step (hereinafter, "step" is simply referred to as "S") 100, the MIL controlling object 400 requests the MIL information to the malfunction-information managing object 200. In response to this request, the malfunction-information managing object 200 outputs the MIL information. When the MIL information is outputted, control moves to S110.

At S110, the vehicle information is acquired. One example of the vehicle information is on/off information of the ignition key.

Next, at S120, it is determined whether a lighting-on condition of the MIL 25 is satisfied based on the MIL information and the vehicle information. If it is determined that the lighting-on condition of the MIL 25 is satisfied (S120: YES), control moves to S130. At S130, a lighting-on instruction is outputted as the MIL response, and the MIL response process ends. On the other hand, if it is determined that the lighting-on condition of the MIL 25 is not satisfied (S120: NO), control moves to S140.

At S140, it is determined whether a flashing condition of the MIL 25 is satisfied based on the MIL information and the vehicle information. If it is determined that the flashing condition is satisfied (S140: YES), control moves to S150. At S150, a flashing instruction is outputted as the MIL response, and the MIL response process ends. On the other hand, if the flashing condition is not satisfied (S140: NO), control moves to S160.

At S160, it is determined whether a lighting-off condition of the MIL 125 is satisfied based on the MIL information and the vehicle inforamtion. If it is determined that the lighting-off condition is satisfied (S160: YES), control moves to S170. At S170, a lighting-off instruction is outputted as the MIL response, and the MIL response process ends. On the other hand, if it is determined that the lighting-off condition is not satisfied (S160: NO), control skips S170, and the MIL response process ends.

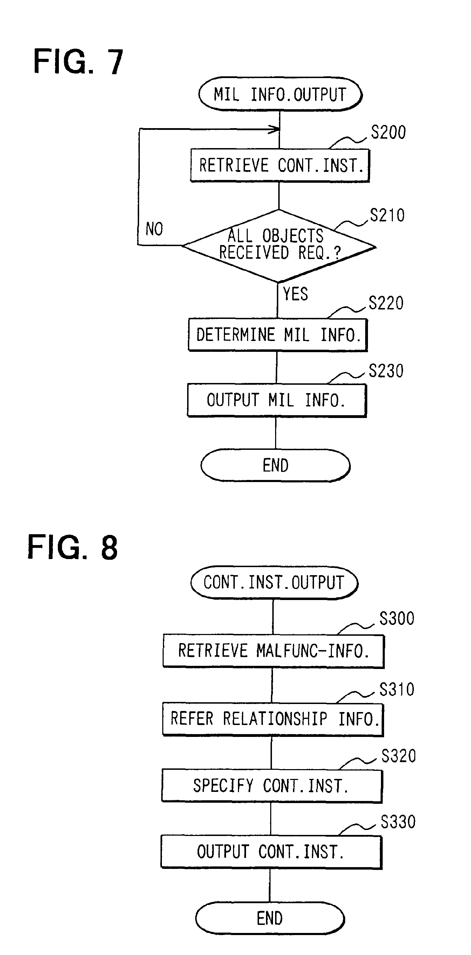

Next, the MIL information output process S2 will be described with reference to FIG. 7.

FIG. 7 is a flowchart showing the MIL information output process S2 executed by the malfunction-information managing object 200. The MIL information output process S2 is executed when the MIL information request is received from the MIL controlling object 400.

First, at S200, the malfunction-information managing object 200 requests each malfunction-information storing object 300 to retrieve the corresponding control instruction. In response to this request, each malfunction-information storing object 300 outputs the control instruction. When the control instruction is outputted, control moves to S210.

At S210, it is determined whether all the malfunction-information storing objects 300 have received the control instruction retrieving request. For example, if there are five malfunction-information storing objects, namely, the first to fifth malfunction-information storing objects 310-350, as shown in FIG. 5, it is determined whether all the five malfunction-information storing objects 310-350 have received the control instruction retrieving request. If it is determined that all the malfunction-information storing objects 300 have received the control instruction retrieving request (S210: YES), control moves to S220. On the other hand, if it is determined that there is any malfunction-information storing object 300 that has not received the control instruction retrieving request (S210: NO), control returns to S200 to repeat the same.

At S220, the MIL information is determined. In this operation, the control instruction of a higher priority outputted from each malfunction-information storing object 300 is selectively determined as the MIL information. As mentioned above, in the present embodiment, the control instructions of the MIL 25 include three types of control instructions, namely, "flashing", "lighting-on" and "lighting-off". Among these instructions, a priority level decreases in the following order: "flashing", "lighting-on" and "lighting-off".

Then, at S230, the selectively determined MIL information is outputted to the MIL controlling object 400, and the MIL information output process ends.

Next, the control instruction output process S3 will be described with reference to FIG. 8.

FIG. 8 is a flowchart showing the control instruction output process S3 executed by each malfunction-information storing object 300. The control instruction output process S3 is executed when the malfunction-information storing object 300 receives the control instruction retrieving request from the malfunction-information managing object 200.

First at step S300, the stored malfunction information is retrieved. In this operation, for example, the first malfunction-information storing object 310 shown in FIG. 5 retrieves "temporarily abnormal" as the malfunction information.

Next, at S310, reference is made to the relationship information. Then, at S320, the control instruction corresponding to the malfunction information retrieved at S300 is specified. For example, since the malfunction information of the first malfunction-information storing object 310 shown in FIG. 5 is "temporarily abnormal", the first malfunction-information storing object 310 specifies "lighting-off" as the control instruction by referring to the relationship information.

Thereafter, at S330, the control instruction specified at S320 is outputted to the malfunction-information managing object 200.

Advantages of the objects 200-400 arranged in the above manner will be described below.

The present embodiment is based on the following fact. That is, the logic for specifying the control instruction of the MIL 25 based on the malfunction information needs to be constructed in view of the type of the diagnosis target. To satisfy this requirement, the adjustment logic for adjusting the result of the malfunction-information determination operation is implemented by the two objects. That is, the malfunction-information storing object 300 specifies the control instruction for the malfunction information (FIG. 8), and the malfunction-information managing object 200 adjusts the specified control instruction (S220 in FIG. 7) and outputs the final MIL information (S230). As a result, even if any diagnosis target is changed, it is only required to change the corresponding malfunction-information storing object 300, so that there is no need to change or modify the malfunction-information managing object 200. Thus, the reusability of the self-diagnosis program is improved, and the disadvantage discussed in the above section (1) can be dissolved.

Furthermore, in the present embodiment, the malfunction-information storing object 300 is prepared for each malfunction check item that corresponds to the diagnosis target. Thus, even if any diagnosis target is changed, it is only required to change or add the corresponding malfunction-information storing object 300. This allows improvement in the reusability of the self-diagnosis program.

Furthermore, the malfunction information indicative of "normal", "temporarily abnormal" or "abnormal" is stored for each malfunction check item, which corresponds to the diagnosis target, by the process that is triggered by the malfunction detection request outputted from the PF 500. Furthermore, the MIL control operation is carried out in the other process that is triggered by the MIL state renewal request. More specifically, the MIL controlling object 400 outputs the MIL information request when the MIL state renewal request acting as the trigger is received from the PF 500. In response to the MIL information request, the malfunction-information managing object 200 outputs the MIL information (FIG. 4). Thus, the MIL control operation can be carried out irrespective of the timing for executing the malfunction-information determination operation. As a result, even if the diagnosis target is changed, and thereby the timing for executing the malfunction-information determination operation is changed, there is no need to change or modify the malfunction-information managing object 200 that outputs the MIL information. Because of this reason, the reusability of the self-diagnosis program is improved, and the disadvantage discussed in the above section (2) can be dissolved.

Furthermore, the adjustment of the result of the malfunction-information determination operation and the MIL control operation are carried out by the different objects, i.e., by the malfunction-information managing object 200, which outputs the MIL information, and the MIL controlling object 400, which controls the MIL, respectively. Thus, even if the diagnosis target is changed, there is a higher possibility that the MIL controlling object 400 is reused. On the other hand, if only the logic for executing the MIL control operation needs to be changed, the malfunction-information managing object 200 can be reused without modifying it. As a result, the reusability of the self-diagnosis program is improved, and the disadvantage discussed in the above section (3) can be dissolved.

Here, the malfunction-information managing object 200 of the present embodiment corresponds to "the malfunction-information managing object" of the present invention, and the malfunction-information storing object 300 corresponds to "the malfunction-information storing object" of the present invention. Also, the MIL controlling object 400 corresponds to "the MIL controlling object" of the present invention.

The self-diagnosis program of the vehicular control device can be provided as the program that is executed by the computer system side. Such a program may be stored in a computer readable recording medium, such as a FD, an MO, a CD-ROM, a DVD, a hard disk or the like and can be loaded to the computer system to execute it therein. Furthermore, a ROM or a backup RAM can be used as the computer readable recording medium to store the program and can be provided in the computer system.

Additional advantages and modifications will readily occur to those skilled in the art. The invention in its broader terms is therefore, not limited to the specific details, representative apparatus, and illustrative examples shown and described.

Each malfunction-information storing object (300) is prepared for each corresponding malfunction check item that is consistent with a corresponding diagnosis target. The malfunction-information storing object (300) specifies a control instruction with respect to each corresponding malfunction information. A malfunction-information managing object (200) adjusts the specified control instruction and outputs final MIL information. In an operation that is conducted separately from an operation that is triggered by a malfunction detection request, an MIL controlling object (400) outputs an MIL information request upon receiving an MIL state renewal request from a platform (500). Upon receiving the MIL information request, the malfunction-information managing object (200) outputs the MIL information. Adjustment of a result of a malfunction determination operation and an MIL control operation are carried out separately by the malfunction-information managing object (200) and the MIL controlling object (400), separately.

## Claims

1. A vehicular control device having a self-diagnosis function for informing occurrence of abnormality in at least one diagnosis target by controlling at least one malfunction indicator light (MIL)(25) based on a result of a malfunction detection operation of each one of said at least one diagnosis target, said vehicular control device being **characterized by** an object oriented self-diagnosis program stored therein for implementing said self-diagnosis function, said object oriented self-diagnosis program including:
at least one malfunction-information storing object (300) that specifies a control instruction for instructing a control operation of said at least one MIL (25) with respect to malfunction information of said each one of said at least one diagnosis target based on said malfunction information of said each one of said at least one diagnosis target, said malfunction information of said each one of said at least one diagnosis target being determined based on said result of said malfunction detection operation of said each one of said at least one diagnosis target in view of a level of malfunction of said each one of said at least one diagnosis target; and
a malfunction-information managing object (200) that carries out adjustment of said control instruction of said at least one MIL (25) specified by said at least one malfunction-information storing object (300) based on said malfunction information of said each one of said at least one diagnosis target and outputs MIL information for controlling said at least one MIL (25) based on a result of said adjustment of said control instruction of said at least one MIL (25).

2. A vehicular control device according to claim 1, **characterized in that**:
said at least one malfunction-information storing object (300) stores said malfunction information of said each one of said at least one diagnosis target; and
said malfunction-information managing object (200) commands said at least one malfunction-information storing object (300) to store said malfunction information of said each one of said at least one diagnosis target based on said result of said malfunction detection operation of said each one of said at least one diagnosis target.

3. A vehicular control device according to claim 1 or 2, **characterized in that** each one of said at least one malfunction-information storing object (300) is prepared for each corresponding one of said at least one diagnosis target or is prepared for each corresponding one of at least one malfunction check item that corresponds to said at least one diagnosis target, respectively.

4. A vehicular control device according to any one of claims 1 to 3, **characterized in that**:
said at least one malfunction-information storing object (300) stores relationship information indicative of relationship between said malfunction information and said control instruction; and
said at least one malfunction-information storing object (300) specifies said control instruction of said at least one MIL (25) based on said relationship information.

5. A vehicular control device according to any one of claims 1 to 4, **characterized in that** said at least one malfunction-information storing object (300) specifies said control instruction based on said malfunction information of said each one of said at least one diagnosis target when a request for retrieving said control instruction is received from said malfunction-information managing object (200).

6. A vehicular control device according to any one of claims 1 to 5, **characterized in that**:
said control instruction is selected from a plurality of control instructions having different predetermined priority levels; and
said malfunction-information managing object (200) outputs one of said control instructions having a highest priority level as said MIL information.

7. A vehicular control device having a self-diagnosis function for informing occurrence of abnormality in at least one diagnosis target by controlling at least one malfunction indicator light (MIL)(25) based on a result of a malfunction detection operation of each one of said at least one diagnosis target, said vehicular control device being **characterized by** an object oriented self-diagnosis program stored therein for implementing said self-diagnosis function, said object oriented self-diagnosis program including:
a malfunction-information managing object (200) that outputs MIL information for controlling said at least one MIL (25) when a request for controlling said at least one MIL is received, said request for controlling said at least one MIL (25) being different from a request for executing said malfunction detection operation of said each one of said at least one diagnosis target.

8. A vehicular control device according to claim 7, **characterized in that** said object oriented self-diagnosis program further includes at least one malfunction-information storing object (300) that stores malfunction information of said each one of said at least one diagnosis target determined based on said result of said malfunction detection operation of said each one of said at least one diagnosis target in view of a level of malfunction of said each one of said at least one diagnosis target, wherein:
said malfunction-information managing object (200) commands said at least one malfunction-information storing object (300) to store said malfunction information of said each one of said at least one diagnosis target based on said result of said malfunction detection operation of said each one of said at least one diagnosis target; and
said malfunction-information managing object (200) outputs said MIL information for controlling said at least one MIL (25) based on said malfunction information of said each one of said at least one diagnosis target stored by said at least one malfunction-information storing object (300).

9. A vehicular control device according to any one of claims 1 to 6, **characterized in that** said malfunction-information managing object (200) outputs said MIL information when a request for controlling said at least one MIL is received, said request for controlling said at least one MIL being different from a request for executing said malfunction detection operation of said each one of said at least one diagnosis target.

10. A vehicular control device having a self-diagnosis function for informing occurrence of abnormality in at least one diagnosis target by controlling at least one malfunction indicator light (MIL)(25) based on a result of a malfunction detection operation of each one of said at least one diagnosis target, said vehicular control device being **characterized by** an object oriented self-diagnosis program stored therein for implementing said self-diagnosis function, said object oriented self-diagnosis program including:
a malfunction-information managing object (200) that outputs MIL information for controlling said at least one MIL (25); and
an MIL controlling object (400) for controlling said at least one MIL (25) based on said MIL information outputted from said malfunction-information managing object (200).

11. A vehicular control device having a self-diagnosis function for informing occurrence of abnormality in at least one diagnosis target by controlling at least one malfunction indicator light (MIL)(25) based on a result of a malfunction detection operation of each one of said at least one diagnosis target, said vehicular control device being **characterized by** an object oriented self-diagnosis program stored therein for implementing said self-diagnosis function, said object oriented self-diagnosis program including:
at least one malfunction-information storing object (300) that stores malfunction information of said each one of said at least one diagnosis target determined based on said result of said malfunction detection operation of said each one of said at least one diagnosis target in view of a level of malfunction of said each one of said at least one diagnosis target;
a malfunction-information managing object (200) that commands said at least one malfunction-information storing object (300) to store said malfunction information of said each one of said at least one diagnosis target based on said result of said malfunction detection operation of said each one of said at least one diagnosis target, said malfunction-information managing object (200) outputting MIL information for controlling said at least one MIL based on said malfunction information of said each one of said at least one diagnosis target stored by said at least one malfunction-information storing object (300); and
an MIL controlling object (400) for controlling said at least one MIL (25) based on said MIL information outputted from said malfunction-information managing object (200).

12. A vehicular control device according to any one of claims 1-6 and 9, **characterized in that** said object oriented self-diagnosis program further includes an MIL controlling object (400) for controlling said at least one MIL (25) based on said MIL information outputted from said malfunction-information managing object (200).

13. A vehicular control device according to claim 7 or 8, **characterized in that** said object oriented self-diagnosis program further includes an MIL controlling object (400) for controlling said at least one MIL (25) based on said MIL information outputted from said malfunction-information managing object (200).

14. An object oriented self-diagnosis program that implements a self-diagnosis function for informing occurrence of abnormality in at least one diagnosis target provided in a vehicle by controlling at least one malfunction indicator light (MIL)(25) based on a result of a malfunction detection operation of each one of said at least one diagnosis target, said object oriented self-diagnosis program **characterized by**:
at least one malfunction-information storing object (300) that specifies a control instruction for instructing a control operation of said at least one MIL (25) with respect to malfunction information of said each one of said at least one diagnosis target based on said malfunction information of said each one of said at least one diagnosis target, said malfunction information of said each one of said at least one diagnosis target being determined based on said result of said malfunction detection operation of said each one of said at least one diagnosis target in view of a level of malfunction of said each one of said at least one diagnosis target; and
a malfunction-information managing object (200) that carries out adjustment of said control instruction of said at least one MIL (25) specified by said at least one malfunction-information storing object (300) based on said malfunction information of said each one of said at least one diagnosis target and outputs MIL information for controlling said at least one MIL (25) based on a result of said adjustment of said control instruction of said at least one MIL (25).

15. An object oriented self-diagnosis program according to claim 14, **characterized in that**:
said at least one malfunction-information storing object (300) stores said malfunction information of said each one of said at least one diagnosis target; and
said malfunction-information managing object (200) commands said at least one malfunction-information storing object (300) to store said malfunction information of said each one of said at least one diagnosis target based on said result of said malfunction detection operation of said each one of said at least one diagnosis target.

16. An object oriented self-diagnosis program according to claim 14 or 15, **characterized in that** each one of said at least one malfunction-information storing object (300) is prepared for each corresponding one of said at least one diagnosis target or is prepared for each corresponding one of at least one malfunction check item that corresponds to said at least one diagnosis target, respectively.

17. An object oriented self-diagnosis program according to any one of claims 14 to 16, **characterized in that**:
said at least one malfunction-information storing object (300) stores relationship information indicative of relationship between said malfunction information and said control instruction; and
said at least one malfunction-information storing object (300) specifies said control instruction of said at least one MIL (25) based on said relationship information.

18. An object oriented self-diagnosis program according to any one of claims 14 to 17, **characterized in that** said at least one malfunction-information storing object (300) specifies said control instruction based on said malfunction information of said each one of said at least one diagnosis target when a request for retrieving said control instruction is received from said malfunction-information managing object (200).

19. An object oriented self-diagnosis program according to any one of claims 14 to 18, **characterized in that**:
said control instruction is selected from a plurality of control instructions having different predetermined priority levels; and
said malfunction-information managing object (200) outputs one of said control instructions having a highest priority level as said MIL information.

20. An object oriented self-diagnosis program that implements a self-diagnosis function for informing occurrence of abnormality in at least one diagnosis target provided in a vehicle by controlling at least one malfunction indicator light (MIL)(25) based on a result of a malfunction detection operation of each one of said at least one diagnosis target, said object oriented self-diagnosis program being **characterized by**:
a malfunction-information managing object (200) that outputs MIL information for controlling said at least one MIL (25) when a request for controlling said at least one MIL is received, said request for controlling said at least one MIL (25) being different from a request for executing said malfunction detection operation of said each one of said at least one diagnosis target.

21. An object oriented self-diagnosis program according to claim 20, **characterized by** at least one malfunction-information storing object (300) that stores malfunction information of said each one of said at least one diagnosis target determined based on said result of said malfunction detection operation of said each one of said at least one diagnosis target in view of a level of malfunction of said each one of said at least one diagnosis target, wherein:
said malfunction-information managing object (200) commands said at least one malfunction-information storing object (300) to store said malfunction information of said each one of said at least one diagnosis target based on said result of said malfunction detection operation of said each one of said at least one diagnosis target; and
said malfunction-information managing object (200) outputs said MIL information for controlling said at least one MIL (25) based on said malfunction information of said each one of said at least one diagnosis target stored by said at least one malfunction-information storing object (300).

22. An object oriented self-diagnosis program according to any one of claims 14 to 19, **characterized in that** said malfunction-information managing object (200) outputs said MIL information when a request for controlling said at least one MIL is received, said request for controlling said at least one MIL being different from a request for executing said malfunction detection operation of said each one of said at least one diagnosis target.

23. An object oriented self-diagnosis program that implements a self-diagnosis function for informing occurrence of abnormality in at least one diagnosis target provided in a vehicle by controlling at least one malfunction indicator light (MIL)(25) based on a result of a malfunction detection operation of each one of said at least one diagnosis target, said object oriented self-diagnosis program being **characterized by**:
a malfunction-information managing object (200) that outputs MIL information for controlling said at least one MIL (25); and
an MIL controlling object (400) for controlling said at least one MIL (25) based on said MIL information outputted from said malfunction-information managing object (200).

24. An object oriented self-diagnosis program that implements a self-diagnosis function for informing occurrence of abnormality in at least one diagnosis target provided in a vehicle by controlling at least one malfunction indicator light (MIL)(25) based on a result of a malfunction detection operation of each one of said at least one diagnosis target, said object oriented self-diagnosis program being **characterized by**:
at least one malfunction-information storing object (300) that stores malfunction information of said each one of said at least one diagnosis target determined based on said result of said malfunction detection operation of said each one of said at least one diagnosis target in view of a level of malfunction of said each one of said at least one diagnosis target;
a malfunction-information managing object (200) that commands said at least one malfunction-information storing object (300) to store said malfunction information of said each one of said at least one diagnosis target based on said result of said malfunction detection operation of said each one of said at least one diagnosis target, said malfunction-information managing object (200) outputting MIL information for controlling said at least one MIL based on said malfunction information of said each one of said at least one diagnosis target stored by said at least one malfunction-information storing object (300); and
an MIL controlling object (400) for controlling said at least one MIL (25) based on said MIL information outputted from said malfunction-information managing object (200).

25. An object oriented self-diagnosis program according to any one of claims 14-19 and 22, **characterized by** an MIL controlling object (400) for controlling said at least one MIL (25) based on said MIL information outputted from said malfunction-information managing object (200).

26. An object oriented self-diagnosis program according to claim 20 or 21, **characterized by** an MIL controlling object (400) for controlling said at least one MIL (25) based on said MIL information outputted from said malfunction-information managing object (200).
